# EUROPÄISCHE PATENTSCHRIFT

(11) **EP 3 811 449 B1**
(45) Veröffentlichungstag und Bekanntmachung des Hinweises auf die Patenterteilung: **15.01.2025**
(21) Anmeldenummer: 19725053.3
(22) Anmeldetag: 10.05.2019
(51) Int. Cl.: H01M 8/248

(54) **BRENNSTOFFZELLENSTAPEL**
FUEL CELL STACK
EMPILEMENT DE PILES À COMBUSTIBLE

(30) Priorität: 22.06.2018 DE 102018210181
(43) Veröffentlichungstag der Anmeldung: 28.04.2021
(73) Patentinhaber: Audi AG, 85045 Ingolstadt (DE); VOLKSWAGEN AG, 38440 Wolfsburg (DE)
(72) Erfinder: JILANI, Adel, Burnaby, British Columbia V5J 5J8 (CA); SANKAR VOOSANI KRISHNA, Siva, Burnaby, British Columbia V5J 5J8 (CA)
(74) Vertreter: Hentrich Patent- & Rechtsanwaltspartnerschaft mbB
(86) Internationale Anmeldenummer: PCT/EP2019/062013
(87) Internationale Veröffentlichungsnummer: WO 2019/242932

(56) Entgegenhaltungen:
- EP-A1- 1 753 065
- DE-A1- 102004 027 694
- DE-A1- 102008 026 858
- FR-A1- 2 865 853
- US-A1- 2009 280 359

## Beschreibung

Die Erfindung betrifft einen Brennstoffzellenstapel gemäß den Merkmalen des Anspruchs 1 und ein Fahrzeug gemäß den Merkmalen des Anspruchs 9.

Brennstoffzellen nutzen die chemische Umsetzung eines Brennstoffs mit Sauerstoff zu Wasser zum Erzeugen elektrischer Energie. Hierfür weisen Brennstoffzellen eine Membran-Elektroden-Anordnung (MEA - membrane electrode assembly) mit einer Membran-Elektroden-Einheit auf. Die Membran-Elektroden-Einheit wird durch eine protonenleitende Membran, PEM, gebildet, an der beidseitig katalytische Elektroden angeordnet sind. Dabei trennt die Membran den der Anode zugeordneten Anodenraum und den der Kathode zugeordneten Kathodenraum voneinander und isoliert diese elektrisch. Auf den nicht der Membran zugewandten Seiten der Elektroden können zudem Gasdiffusionslagen angeordnet sein.

Im Betrieb der Brennstoffzelle wird ein wasserstoffhaltiger Brennstoff der Anode zugeführt, an der eine elektrochemische Oxidation von H2 zu H+ unter Abgabe von Elektronen erfolgt. Über die elektrolytische Membran erfolgt ein wassergebundener oder wasserfreier Transport der Protonen H+ aus dem Anodenraum in den Kathodenraum. Die an der Anode bereitgestellten Elektronen werden über eine elektrische Leitung der Kathode zugeleitet.

Der Kathode wird ein sauerstoffhaltiges Betriebsmedium zugeführt, sodass dort eine Reduktion von 02 zu 02 unter Aufnahme der Elektronen erfolgt. Diese Sauerstoffanionen reagieren im Kathodenraum mit den über die Membran transportierten Protonen unter Bildung von Wasser. Ein Brennstoffzellenstapel ist in der Regel durch eine Vielzahl in einem Stapel (stack) in Stapelrichtung übereinander angeordneter MEA gebildet, deren elektrische Leistungen sich addieren. Zwischen den Membran-Elektroden- Anordnungen sind üblicherweise Bipolarplatten angeordnet, die eine Versorgung der einzelnen MEA mit den Reaktanten und einer Kühlflüssigkeit sicherstellen sowie als elektrisch leitfähiger Kontakt zu den Membran- Elektroden-Anordnungen fungieren.

Zwischen den Membran-Elektroden-Einheiten und den Bipolarplatten sind Dichtungen angeordnet, um die Anoden- und Kathodenräume nach außen abzudichten und ein Austreten der Betriebsmedien aus dem Stapel zu verhindern. Diese Dichtungen sind auf den Membran-Elektroden-Einheiten, den Bipolarplatten oder diesen beiden Komponenten vorgesehen.

Zum dauerhaften Abdichten des Stapels und zum Gewährleisten des elektrischen Kontakts zwischen Bipolarplatten und Membran-Elektroden- Anordnungen wird der Brennstoffzellenstapel vor der Inbetriebnahme verpresst. Ferner werden Zugelemente eingesetzt, um den Brennstoffzellenstapel auch während des Betriebs zu verpressen.

Aus dem Stand der Technik sind verschiedene Zugelemente bekannt. Beispielsweise können zwei an den Enden des Brennstoffzellenstapels angeordnete Endplatten mittels Zugelementen verbunden werden. Durch Einleiten von Zugkräften über die Zugelemente in die Endplatten wird der Brennstoffzellenstapel zusammengepresst. Als Zugelemente werden beispielsweise Gewindestäbe, Zuganker, Ketten oder dergleichen eingesetzt.

Ebenfalls bekannt ist die Verwendung von gespannten streifen- oder band- förmigen elastischen Spannelementen, die entweder mit den Endplatten verbunden sind oder den Stapel in zumindest einem Querschnitt (in Stapelrichtung) zumindest teilweise umlaufen.

Hinsichtlich von Ausgestaltung und Befestigungsmöglichkeiten derartiger Zug- und Spannelemente wird beispielsweise auf die EP 1 870 952 A2, die DE 10 2012 000 266 A1 , die WO 2012/065890 A1 und die DE 11 2014 001 941 T5 verwiesen, auf deren Inhalte hiermit vollumfänglich Bezug genommen wird.

Insbesondere in den aktiven Bereichen des Brennstoffzellenstapels beziehungsweise der MEAs kann es zu betriebsbedingten Höhenänderungen kommen, die beispielsweise mit der Temperatur und dem Feuchtegehalt des Brennstoffzellenstapels variieren können. Man spricht auch davon, dass der Stapel atmet. Bei der Verwendung elastischer Spannelemente kann zudem die Elastizität dieser Spannelemente mit der Zeit abnehmen. Insbesondere bei metallischen Spannelementen, die den Brennstoffzellenstapel ringförmig umlaufen und somit mehrere deutliche Knicke aufweisen, kommt es insbesondere im Bereich dieser Umbiegungen zum Längen der Spannelemente.

Unabhängig von den Höhenänderungen des Brennstoffzellenstapels und der Alterung der Spannelemente muss stets eine ausreichende Kompression des Stapels gewährleistet werden, insbesondere um die Dichtwirkung der eingesetzten Dichtungen zu garantieren. Aus dem Stand der Technik sind daher bereits Mittel bekannt, mit denen versucht werden soll, die Kompression eines Brennstoffzellenstapels auch dauerhaft zu gewährleisten.

Die DE 10 2010 007 979 A1 offenbart einen Brennstoffzellenstapel mit zwischen zwei Endplatten angeordneten Brennstoffzellen und mindestens einem die Endplatten verbindenden Verspannungsmittels zum Ausüben einer Zugkraft. Zwischen dem Verspannungsmittel und zumindest einer der Endplatten ist ein reibungsminderndes Umlenkmittel angeordnet. Eine Höhenänderung des Stapels soll durch zwischen einer Endplatte und einer Kompressionsplatte angeordnete komprimierte Federelemente ausgeglichen werden.

Gemäß diesem Stand der Technik sollen Spannungsspitzen aufgrund der Ausdehnung des Stapels durch elastische Elemente vermieden werden. Ein anfängliches Überspannen der elastischen Elemente soll eine Höhenänderung des Stapels sogar zum Teil vermeiden können. Die elastischen Elemente unterliegen jedoch selbst einer Alterung und zumindest insofern ist diese passive Möglichkeit zur Einstellung der Kompressionskraft nachteilig.

Bei bekannten Lösungen mit zwischen den Endplatten und anderen Stapelkomponenten angeordneten komprimierten Federelementen, können Vertiefungen in den Endplatten vorgesehen sein, um die Federelemente aufzunehmen. Hierfür ist zusätzlicher Bauraum im Brennstoffzellenstapel notwendig, ferner erhöhen die Vertiefungen die Neigung der Endplatten zu Deformation und Beschädigung unter den einwirkenden Druck- oder Zugkräften.

Ein weiterer Nachteil bekannter Lösungen besteht darin, dass diese ein gleichmäßiges Verspannen der gesamten Endplatten häufig nicht gewähr- leisten können. So können bekannte Spannelemente häufig nicht im Bereich von Ein- oder Auslassöffnungen der Betriebsmedien angeordnet werden, ohne diese zu blockieren. Ein Beispiel hierfür ist in der US 2006/0093890 A1 offenbart. Dies führt nachteilig zu einem Aufbiegen der Endplattenränder.

Die DE 10 2008 026 858 A1 offenbart ein Brennstoffzellensystem mit einem zwischen den Enden des Brennstoffzellenstapels gespanntem Kompressionsbeibehaltungssystem, welches eine Mehrzahl von Riemen aufweist.

Die US 2009/0280359 A1 zeigt ein Brennstoffzellensystem mit einem Brennstoffzellenstapel, dessen Enden mittels einer Mehrzahl von Federn miteinander verspannt sind.

Die DE 10 2004 027 694 A1 offenbart einen Brennstoffzellenstapel, dessen Endplatten mittels Spannbändern gespannt werden. An den Spannbändern sind Mittel zum Spannen der Spannbänder vorhanden, wobei zwischen den Mitteln und dem Brennstoffzellenstapel Tellerfedern angeordnet sind. Weder die Spannbänder noch die Tellerfedern sind, in einem Endbereich der Endplatten angeordnet.

Der Erfindung liegt nun die Aufgabe zugrunde, die Nachteile des Standes der Technik zu überwinden und eine Lösung zur möglichst gleichmäßigen Kompression von Brennstoffzellenstapeln bereitzustellen, welche platzsparend in bestehende Brennstoffzellenstapel integrierbar ist.

Die den Brennstoffzellenstapel betreffende Aufgabe wird gelöst durch einen Brennstoffzellenstapel mit den Merkmalen des Anspruchs 1. Die das Fahrzeug betreffende Aufgabe wird gelöst durch ein Fahrzeug mit den Merkmalen des Anspruchs 9.

Diese Aufgabe wird gelöst durch einen Brennstoffzellenstapel mit einer ersten Endplatte und einer zweiten Endplatte und einer Vielzahl von in Stapelrichtung zwischen den zwei Endplatten angeordneten Brennstoffzellen. Ferner weist der Brennstoffzellenstapel zumindest ein in Stapelrichtung zwischen den Endplatten gespanntes elastisches Zug- oder Spannelement auf.

Bei diesem zumindest einen ersten Zug- oder Spannelement handelt es sich bevorzugt um Gewindestäbe, Zuganker, Ketten oder dergleichen. Ebenfalls bevorzugt handelt es sich bei dem ersten Zug- oder Spannelement um gespannte streifen- oder bandförmige elastische Spannelemente, die entweder mit den Endplatten verbunden sind oder den Stapel in zumindest einem Querschnitt (in Stapelrichtung) zumindest teilweise umlaufen. Mit anderen Worten handelt es sich bei dem ersten Zug- oder Spannelement um gewöhnliche, aus dem Stand der Technik bekannte und bereits regelmäßig zum Komprimieren von Brennstoffzellenstapeln eingesetzte Bauteile.

In ersten Endbereichen der ersten Endplatte und/oder in zweiten Endbereichen der zweiten Endplatte sind Ein- und Auslassöffnungen für Betriebsmedien angeordnet. Bei den Endbereichen handelt es sich stets um randständige Bereiche der Endplatten, die somit immer zumindest einen Kantenbereich der Endplatte umfassen. Bevorzugt weist jede Endplatte zwei Endbereiche auf, die an gegenüberliegende Kantenbereichen angeordnet sind beziehungsweise diese umfassen. Beispielsweise haben rechteckige Endplatten stets zwei Paare gegenüberliegender Kantenbereiche. Die Endbereiche sind dann bevorzugt an dem Paar der kürzeren Kantenbereiche angeordnet.

Bei den Ein- und Auslassöffnungen handelt es sich bevorzugt um Ein- und Auslassöffnungen für ein Anodenbetriebsmittel, ein Kathodenbetriebsmittel und ein Kühlmittel. Beispielsweise weist eine erste Endplatte Einlassöffnungen und Auslassöffnungen auf, wohingegen eine zweite Endplatte keinerlei solche Öffnungen aufweist. Alternativ weist eine erste Endplatte nur Einlass- Öffnungen und eine zweite Endplatte nur Auslassöffnungen auf. Ebenso kann eine erste Endplatte erste Einlassöffnungen, beispielsweise für Anoden- und/oder Kathodenbetriebsmittel, und die zweite Endplatte zweite Einlassöffnungen, beispielsweise für ein Kühlmittel, aufweisen. Die Anordnung der Ein- und Auslassöffnungen in den Endplatten hängt dabei wesentlich von den Strömungswegen innerhalb des Brennstoffzellenstapels sowie der Anordnung von Peripheriekomponenten, zum Beispiel einem Kühlmitteltank, ab.

Erfindungsgemäß ist zumindest ein (zweites) elastisches Spannelement zwischen zumindest einem ersten und zumindest einem zweiten Endbereich der Endplatten gespannt. Das zumindest eine (zweite) elastische Spannelement ist dabei von dem zumindest einen (ersten) Zug- oder Spannelement verschieden und ausschließlich in Endbereichen der Endplatten angeordnet. Ein Brennstoffzellenstapel, der erste Zug- oder Spannelemente zum Verspannen des Gesamtstapels aufweist, hat erfindungsgemäß zusätzlich zweite elastische Spannelemente zum Verspannen der Endbereiche der Endplatten.

Vorteilhaft ermöglicht der erfindungsgemäße Brennstoffzellenstapel somit ein gezieltes Verspannen der die Betriebsmittelöffnungen aufweisenden Endbereiche von Endplatten durch die Verwendung von ersten Zug- oder Spannelementen und zweiten Spannelementen. Somit wird ein Aufbiegen der Endplatten in den Endbereichen, ein Beschädigen der Endbereiche durch zu ho- he Zugkräfte oder ein Blockieren der Ein-/ Auslassöffnungen verhindert.

Erfindungsgemäß unterscheidet sich eine von einem gespannten (ersten) Zug- oder Spanelement aufgebrachte Zugspannung von einer von einem gespannten (zweiten) elastischen Spannelement aufgebrachten Zugspannung. Dabei ist erfindungsgemäß die von einem zweiten elastischen Spannelement aufgebrachte Zugspannung geringer, als die von einem ersten Zug- oder Spannelement aufgebrachte Zugspannung. Vorteilhaft wird so ein Aufbiegen der Endplatten und ein zu starkes Verspannen der Endbereiche verhindert. Bevorzugt ist das elastische Spannelement im Hook'schen Bereich sowie in einer Stapelrichtung (S) des Brennstoffzellenstapels gespannt.

Das zumindest eine zweite elastische Spannelement ist bevorzugt stoff-, kraft- , und/oder formschlüssig und/oder mittels mindestens eines Spannmittels an zumindest einer Endplatte fixiert. Um eine einfache Demontage des Brennstoffzellenstapels zu gewährleisten, ist das elastische Spannelement bevorzugt an mindestens einer Endplatte des Stapels lösbar fixiert.

Besonders bevorzugt ist das elastische zweite Spannelement an der Endplatte eingehängt. Hierfür weist die Endplatte bevorzugt zumindest einen Einhängehaken zum Einhängen des elastischen Spannelements an einer seiner Seitenflächen oder auf seiner in Stapelrichtung nach außen weisenden Oberfläche auf. Alternativ weist das elastische Spannelement mindestens eine Einhängeöffnung zum Einhängen an einen Einhängehaken auf.

Ebenfalls bevorzugt erstreckt sich das zumindest eine erste Zug- oder Spannelement in einem Querschnitt in Stapelrichtung zumindest im Wesentlichen um einen Umfang des Brennstoffzellenstapels. Dabei ist ein Zug- oder Spannelement an mindestens einem Endbereich an einem anderen Endbereich desselben oder eines anderen Zug- oder Spannelements fixiert. Das Zug- oder Spannelement ist bevorzugt ringförmig geschlossen ausgebildet.

Besonders bevorzugt ist der Endbereich des zumindest einen ersten Zug- oder Spannelements formschlüssig mit einem anderen Endbereich desselben Zug- oder Spannelements verbunden, beispielsweise durch eine Crimpverbindung. Ebenfalls bevorzugt ist ein Endbereich des zumindest einen Zug- oder Spannelements mittels einer Befestigungsvorrichtung an einem anderen Endbereich desselben oder eines anderen Zug- oder Spannelements fixiert. Besonders bevorzugt ist ein Endbereich des zumindest einen Zug- oder Spannelements an einem anderen Endbereich desselben oder eines anderen Zug- oder Spannelements verschweißt.

In einer ebenfalls bevorzugten Ausführungsform weist der erfindungsgemäße Brennstoffzellenstapel zumindest eine drehbare Montagewelle auf, die entlang eines Kantenbereichs des ersten Endbereichs und/oder des zweiten Endbereichs angeordnet ist. Bevorzugt ist die Montagewelle in den jeweiligen Kantenbereich integriert und besonders bevorzugt drehbar in oder an diesem Kantenbereich gelagert. Gemäß dieser Ausführungsform ist ein Endabschnitt zumindest eines elastischen Spannelements an der Montagewelle fixiert, bevorzugt kraft-, stoff- und/oder formschlüssig, um Relativbewegungen zwischen dem Endabschnitt und der Montagewelle zu verhindern.

Der Kantenbereich einer Endplatte bezeichnet dabei einen Übergang von einer ersten, nach außen weisenden Oberfläche der Endplatte und einer zweiten, zur ersten Oberfläche senkrechten Oberflächen der Endplatte. Die zweite Oberfläche erstreckt sich dabei bevorzugt entlang der Stapelrichtung des Brennstoffzellenstapels beziehungsweise weist einen zur Stapelrichtung senkrechten Normalenvektor auf.

Besonders bevorzugt ist die zumindest eine Montagewelle im Bereich eines Kantenbereichs einer Endplatte abschnittsweise durch die Endplatte hindurch geführt. Bei einer zylinderförmigen Montagewelle weist die Endplatte in dieser Ausführungsform bevorzugt eine zylinderförmige Bohrung auf. Vorteilhaft ist somit eine einfache drehbare Lagerung der Montagewelle realisiert.

Ferner bevorzugt weist die Endplatte gemäß dieser Ausführungsform Aussparungen beziehungsweise Rücksprünge des Kantenbereichs auf, in denen die Montagewelle freiliegt. Besonders bevorzugt ist das zumindest eine elastische Spannelement im Bereich der Aussparung an der Montagewelle befestigt. Dies erleichtert vorteilhaft dessen Aufwickeln auf die Montagewelle.

Durch die Fixierung des Endabschnitts zumindest eines zweiten elastischen Spannelements an der Montagewelle ist die Zugspannung des zumindest einen elastischen Spannelements durch die Drehung der Montagewelle einstellbar. Der erfindungsgemäße Brennstoffzellenstapel erlaubt somit ein exaktes Nachspannen des zumindest einen elastischen Spannelements.

Bevorzugt ist auch ein zweiter Endabschnitt des zumindest einen elastischen Spannelements an dem Brennstoffzellenstapel fixiert. Der zweite Endabschnitt ist dabei verschieden von dem ersten Endabschnitt und jedes elastische Spannelement weist einen ersten und einen zweiten Endabschnitt auf.

Der zweite Endabschnitt ist bevorzugt an einer weiteren Montagewelle fixiert. Somit kann das elastische Spannelement vorteilhaft beidseitig und somit besonders gleichmäßig und exakt nachgespannt werden. Ebenfalls bevorzugt ist der zweite Endabschnitt an einem beliebigen anderen Abschnitt des Brennstoffzellenstapels, insbesondere einem Endbereich einer Endplatte, fest fixiert. Dies ist eine besonders einfache Ausführungsform der Erfindung.

Das Einstellen der Zugspannung erfolgt bevorzugt durch Aufwickeln des elastischen Spannelements auf die Montagewelle durch Drehen der Montagewelle in eine erste Drehrichtung. Somit wird das zumindest eine elastische Spannelement zwischen der ersten und zweiten Endplatte effektiv verkürzt und dadurch die von diesem erzeugte Zugkraft erhöht. Vorteilhaft kann das elastische Spannelement durch Drehen der Montagewelle in eine entgegengesetzte zweite Drehrichtung wieder von der Montagewelle abgewickelt werden. Somit wird das zumindest eine elastische Spannelement zwischen der ersten und zweiten Endplatte effektiv gelängt und dadurch die von diesem erzeugte Zugkraft verringert. Somit ist eine Kompression insbesondere im Bereich der Endbereiche der Endplatten besonders präzise einstellbar.

In einer ebenfalls bevorzugten Ausführungsform des erfindungsgemäßen Brennstoffzellenstapels weist die zumindest eine Montagewelle eine längserstreckte Radialnut auf. Diese erstreckt sich bevorzugt parallel zu einer Rotationsachse der Montagewelle. Die Radialnut ist bevorzugt zur Aufnahme des Endabschnitts des zumindest einen elastischen Spannelements ausgebildet. Mit anderen Worten wird der Endabschnitt des elastischen Spannelements in die Radialnut eingeführt und dort fixiert, beispielsweise stoffschlüssig, formschlüssig und/oder kraftschlüssig.

In einer bevorzugten Ausführungsform des Brennstoffzellenstapels ist die drehbare Montagewelle über zumindest eine gespannte Torsionsfeder mit dem Brennstoffzellenstapel, insbesondere einem Endbereich einer der Endplatten, verbunden. Mit anderen Worten ist die Torsionsfeder an der Montagewelle fixiert und zusätzlich an dem Brennstoffzellenstapel, insbesondere einer Endplatte, fixiert. Bevorzugt ist ein erstes Ende der Torsionsfeder, beispielsweise ein erstes Ende eines zur Feder gewickelten Drahts, an der Montagewelle und ein zweites Ende der Torsionsfeder, beispielsweise ein zweites Ende des zur Feder gewickelten Drahts, an dem Brennstoffzellenstapel befestigt. Somit wird die Federspannung beziehungsweise das Drehmoment der gespannten Torsionsfeder auf die drehbar gelagerte Montagewelle übertragen. Bevorzugt ist die Torsionsfeder so mit der Montagewelle verbunden, dass ein von der Feder ausgeübtes Drehmoment einer von dem elastischen Spannelement ausgeübten Zugspannung entgegengesetzt ist.

Durch die Anordnung der gespannten Torsionsfeder zwischen Montagewelle und Brennstoffzellenstapel, insbesondere dem Endbereich einer Endplatte, wird vorteilhaft ein gerichtetes, der Zugspannung des elastischen Spanelements entgegengesetztes Drehmoment auf die Montagewelle übertragen. Vorteilhaft führt die Feder somit bei Nachlassen der Zugspannung des elastischen Spannelements, beispielsweise aufgrund von alterungsbedingtem Längen des elastischen Spannelements, zum Nachspannen des elastischen Spannelements mittels des Drehmoments der Torsionsfeder.

Gemäß dieser bevorzugten Ausführungsform wird eine Kompression des Brennstoffzellenstapels, insbesondere der mittels elastischer Spannelemente verspannten Endbereiche der Endplatten auch über einen ausgedehnten Zeitraum sicher gewährleistet. Besonders vorteilhaft erfolgt ein automatisches Nachspannen eines gelängten elastischen Spannelements durch Aufwickeln des elastischen Spannelements auf die Montagewelle mittels der in zumindest einer Torsionsfeder gespeicherten, potentiellen Energie. Das Aufwickeln erfolgt dabei nur, wenn die Zugspannung des elastischen Spannelements das Drehmoment der Torsionsfeder unterschreitet.

Ebenfalls bevorzugt ist das zumindest eine elastische zweite Spannelement, bevorzugt jedes elastische Spannelement, über eine Mehrzahl von mit der zumindest einen Montagewelle verbundenen Torsionsfedern gespannt. Dazu ist das zumindest eine elastische Spannelement an einer Montagewelle fixiert und ist die Mehrzahl gespannter Torsionsfedern an dieser Montagewelle und dem Brennstoffzellenstapel fixiert. So addieren sich die von der Mehrzahl Torsionsfedern aufgebrachten Federkräfte zu einer Gesamtkraft.

In einer ferner bevorzugten Ausführungsform handelt es sich bei der zumindest einen Torsionsfeder um eine Schraubenfeder, besonders bevorzugt um eine aus Draht oder Federstahl spiralig gewickelte Schraubenfeder. Ebenfalls bevorzugt handelt es sich bei der Torsionsfeder um eine Drehstabfeder beziehungsweise einen Torsionsstab. Ferner bevorzugt ist eine solche Drehstabfeder integral mit der Montagewelle ausgebildet, beispielsweise als ein mit dem Brennstoffzellenstapel, bevorzugt einer Endplatte, verbundener Abschnitt der Drehstabfeder. Ebenfalls bevorzugt ist die Torsionsfeder als gefräste Hohlfeder (*machined spring*) ausgebildet. Dabei ist die Torsionsfeder besonders bevorzugt aus einem Hohlzylinder aus Federstahl gefräst worden. Derartige gefräste Hohlfedern ermöglichen vorteilhaft eine besonders exakte Einstellung der Federkraft, insbesondere auch über ausgedehnte Zeiträume.

Die Verbindung zwischen Torsionsfeder und Montagewelle beziehungsweise Torsionsfeder und Brennstoffzellenstapel ist auf vielfältige Art realisierbar. Beispielsweise ist die Torsionsfeder an den Brennstoffzellenstapel, bevorzugt eine Endplatte, angeflanscht. Auch die Montagewelle kann einen auskragenden Flanschbereich zur Befestigung der Torsionsfeder aufweisen. Alternativ ist die Torsionsfeder unlösbar mit der Montagewelle verbunden, beispielsweise verschweißt. Ferner bevorzugt ist die Torsionsfeder mittels Formschluss, beispielsweise über Bajonett-Anschlusselemente mit dem Brennstoffzellenstapel und/oder der Montagewelle verbunden. Derartige Anschlusselemente sind bevorzugt selbstsichernd ausgebildet, insbesondere unter Berücksichtigung der Wirkrichtung der Federkraft der Torsionsfeder.

In einer ebenfalls besonders bevorzugten Ausführungsform weist der erfindungsgemäße Brennstoffzellenstapel ferner zumindest einen Elektromotor auf, der zum elektromotorischen Antrieb der zumindest einen Montagewelle ausgebildet ist. Mit anderen Worten ist die zumindest eine Montagewelle mittels eines Elektromotors drehbar. Bevorzugt erlaubt der Motor das Drehen der Montagewelle in einer ersten Drehrichtung und besonders bevorzugt in einer ersten und einer entgegengesetzten zweiten Drehrichtung. Diese Ausführungsform erlaubt vorteilhaft ein automatisiertes Nachspannen der zumindest einen mit der Montagewelle fest verbundenen Torsionsfeder. Somit kann einem altersbedingten Spannungsverlust von den Torsionsfedern selbst entgegengewirkt werden. Ferner ermöglicht der Elektromotor unmittelbar auch das Nachspannen des zweiten elastischen Spannelements.

Besonders bevorzugt weist der Brennstoffzellenstapel zumindest einen Sensor auf, der zum Erfassen einer von zumindest einem elastischen Spannelement ausgeübten Zugkraft und/oder der von zumindest einer Torsionsfeder ausgeübten Federkraft ausgebildet ist. Bevorzugt erfasst der Sensor die von einem bestimmten elastischen Spannelement ausgeübte Zugkraft und/oder die von einer bestimmten Torsionsfeder ausgeübte Federkraft. Beispielsweise ist ein solcher Sensor als Dehnungsmessstreifen ausgebildet. Besonders bevorzugt ist ein Sensor, insbesondere ein Dehnungsmessstreifen, an jedem zweiten elastischen Spannelement angeordnet.

Die Verwendung solcher Sensoren im erfindungsgemäßen Brennstoffzellenstapel ermöglicht vorteilhaft das Messen von Längenänderung der elastischen Spannelemente. Anhand der Längenänderung des elastischen Spannelements wird bevorzugt eine Zugkraft beziehungsweise Zugkraftänderung des jeweiligen elastischen Spannelements ermittelt. Daraus lassen sich Rückschlüsse ziehen, dass das elastische Spannelement nachgespannt werden muss oder eine oder mehrere Torsionsfedern zum Ausgleich des Zugspannungsverlusts nicht mehr ausreichend gespannt sind. Durch Nachspannen des elastischen Spannelements und/oder der Federn wird die dauerhafte Kompression der Endbereiche der Endplatten gewährleistet.

Ferner bevorzugt weist der erfindungsgemäße Brennstoffzellenstapel zumindest eine Steuereinheit auf, die mit dem zumindest einen Sensor verbunden und zum Betrieb des zumindest einen Elektromotors ausgebildet ist. Die Steuereinheit ist bevorzugt zum Empfang eines Sensorsignals von dem zumindest einem Sensor ausgebildet. Ferner ist die Steuereinheit zur Ausgabe eines Steuersignals an den zumindest einen Elektromotor ausgebildet. Die Ausführungsform ermöglicht vorteilhaft ein automatisiertes Nachspannen des elastischen Spannelements und/oder der Torsionsfedern anhand von Sensorwerten zur Zugkraft der elastischen Spannelemente und/oder anhand von Sensorwerten zur Federkraft der Torsionsfedern.

In einer besonders bevorzugten Ausführungsform weist der Brennstoffzellenstapel eine Mehrzahl von zweiten elastischen Spannelementen und eine Mehrzahl von Montagewellen auf. Jede Montagewelle ist dabei mit ein oder mehreren gespannten Torsionsfedern mit dem Brennstoffzellenstapel, insbesondere einem Endbereich einer Endplatte, verbunden und an jeder Montagewelle sind ein oder mehrere elastische Spannelemente fixiert. Ferner bevorzugt weist der Brennstoffzellenstapel eine Mehrzahl von zum Antrieb zumindest einer der Montagewellen ausgebildeten Elektromotoren auf.

Diese Ausführungsform ermöglicht eine Zugspannungskontrolle von individuellen Gruppen von elastischen Spannelementen oder sogar von einzelnen elastischen Spannelementen. Wesentlich dafür ist, dass verschiedene elastische Spannelemente an verschiedenen Montagewellen fixiert sind. Das Drehen der Montagewellen erfolgt bevorzugt durch einen gemeinsamen Elektromotor. Beispielsweise können zwei Montagewellen von einem mittig zwischen diesen Wellen angeordneten Motor betrieben werden. Ebenfalls bevorzugt sind mehrere Montagewellen über jeweilige Kupplungen steuerbar kraftschlüssig mit einem gemeinsamen Motor verbunden. Der Brennstoffzellenstapel weist ferner bevorzugt eine Mehrzahl von zum Messen der Zugspannung der elastischen Spannelemente eingerichtete Sensoren auf.

Ferner bevorzugt weist die zumindest eine Montagewelle zumindest ein Sperrrad und zumindest eine mit dem Sperrrad in Eingriff stehende Sperrklinke auf.

Bevorzugt wird somit das Prinzip einer Ratsche genutzt, um eine Drehung der Montagewelle nur in eine Richtung zu gestatten. Somit können vorteilhaft die Torsionsfedern entlastet und die Lager der Elektromotoren geschont werden. Ferner wird vorteilhaft ein manuelles Nachspannen und Sichern der elastischen Spannelemente ermöglicht.

Ebenfalls Gegenstand der Erfindung ist ein Fahrzeug, insbesondere ein elektromotorisch betriebenes Fahrzeug mit einem erfindungsgemäßen Brennstoffzellenstapel, wie vorstehend beschrieben. Der Brennstoffzellenstapel dient dabei insbesondere dem Speisen eines Elektromotors des Fahrzeugs.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders erläutert, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Brennstoffzellensystems gemäß dem Stand der Technik;
- Figur 2: einen Brennstoffzellenstapel mit einer Mehrzahl den Stapel komprimierender Spannelemente gemäß Stand der Technik;
- Figur 3: eine Detaildarstellung des Brennstoffzellenstapels gemäß Fig.2;
- Figur 4: eine Detaildarstellung des Brennstoffzellenstapels gemäß Fig.2;
- Figur 5: einen Brennstoffzellenstapel gemäß einer Ausführungsform;
- Figur 6: eine Detaildarstellung des Brennstoffzellenstapels der Fig. 5;
- Figur 7: einen Brennstoffzellenstapel gemäß einer alternativen Ausführungsform; und
- Figur 8: zwei Varianten gefräster Hohlfedern.

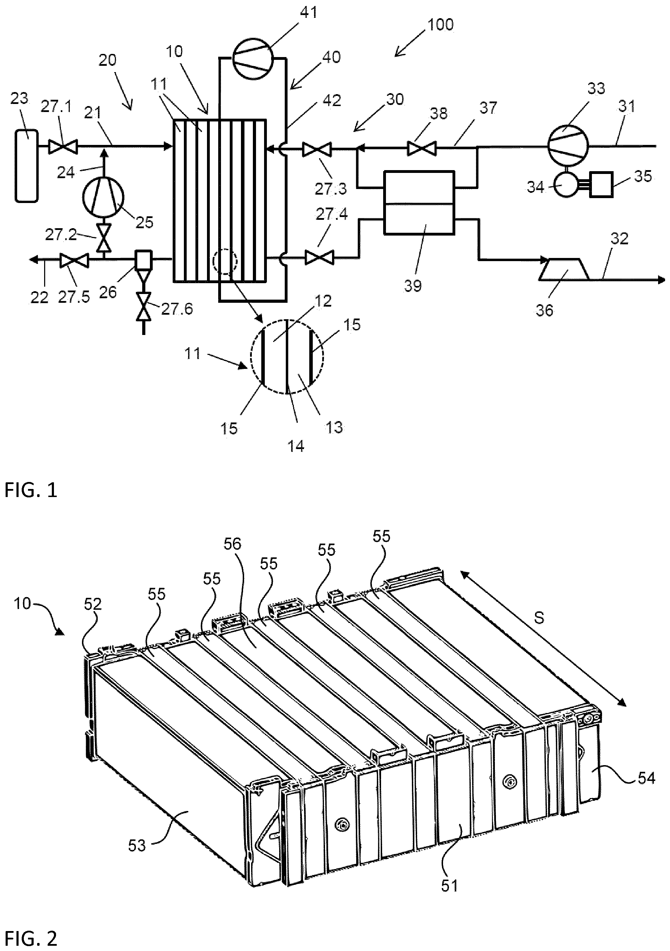

Figur 1 zeigt ein insgesamt mit 100 bezeichnetes Brennstoffzellensystem gemäß dem Stand der Technik. Das Brennstoffzellensystem 100 ist Teil eines nicht weiter dargestellten Fahrzeugs, insbesondere eines Elektrofahrzeugs, das einen Elektrotraktionsmotor aufweist, der durch das Brennstoffzellensystem 100 mit elektrischer Energie versorgt wird.

Das Brennstoffzellensystem 100 umfasst als Kernkomponente einen Brennstoffzellenstapel 10, der eine Vielzahl von in Stapelform angeordneten Einzelzellen 11 aufweist, die durch abwechselnd gestapelte Membran-Elektroden-Anordnungen (MEA) 14 und Bipolarplatten 15 ausgebildet werden (siehe Detailausschnitt). Jede Einzelzelle 11 umfasst somit jeweils eine MEA 14 mit einer hier nicht näher dargestellten ionenleitfähigen Polymerelektrolytmembran sowie beidseits daran angeordneten katalytischen Elektroden. Diese Elektroden katalysieren die jeweilige Teilreaktion der Brennstoffumsetzung. Die Anoden- und Kathodenelektrode sind als Beschichtung auf der Membran ausgebildet und weisen ein katalytisches Material auf, beispielsweise Platin, das auf einem elektrisch leitfähigen Trägermaterial großer spezifischer Oberfläche, beispielsweise einem kohlenstoffbasierten Material, geträgert vorliegt.

Wie in der Detaildarstellung der Figur 1 gezeigt, ist zwischen einer Bipolarplatte 15 und der Anode ein Anodenraum 12 ausgebildet und zwischen der Kathode und der nächsten Bipolarplatte 15 ist der Kathodenraum 13 ausgebildet. Die Bipolarplatten 15 dienen der Zuführung der Betriebsmittel in die Anoden- und Kathodenräume 12, 13 und stellen ferner die elektrische Verbindung zwischen den einzelnen Brennstoffzellen 11 her. Optional können Gasdiffusionslagen zwischen den Membran-Elektroden-Anordnungen 14 und den Bipolarplatten 15 angeordnet sein.

Um den Brennstoffzellenstapel 10 mit den Betriebsmitteln zu versorgen, weist das Brennstoffzellensystem 100 einerseits eine Anodenversorgung 20 und andererseits eine Kathodenversorgung 30 auf.

Die Anodenversorgung 20 des in Figur 1 gezeigten Brennstoffzellen-systems 100 umfasst einen Anodenversorgungspfad 21, welcher der Zuführung eines Anodenbetriebsmittels (dem Brennstoff), beispielsweise Wasserstoff, in die Anodenräume 12 des Brennstoffzellenstapels 10 dient. Zu diesem Zweck verbindet der Anodenversorgungspfad 21 einen Brennstoffspeicher 23 mit einem Anodeneinlass des Brennstoffzellenstapels 10. Das Einstellen des Einspeisedrucks des Anodenbetriebsmediums in die Anodenräume 12 des Brennstoffzellenstapels 10 erfolgt über ein Dosierventil 27.1. Die Anodenversorgung 20 umfasst ferner einen Anodenabgaspfad 22, der das Anodenabgas aus den Anodenräumen 12 über einen Anodenauslass des Brennstoffzellenstapels 10 abführt.

Darüber hinaus weist die Anodenversorgung 20 des in Figur 1 gezeigten Brennstoffzellensystems 100 eine Rezirkulationsleitung 24 auf, welche den Anodenabgaspfad 22 mit dem Anodenversorgungspfad 21 verbindet. Die Rezirkulation von Brennstoff ist üblich, um den überstöchiometrisch eingesetzten Brennstoff dem Brennstoffzellenstapel 10 zurückzuführen. In der Rezirkulationsleitung 24 sind eine Rezirkulationsfördereinrichtung 25, vorzugsweise ein Rezirkulationsgebläse, sowie ein Klappenventil 27.2 angeordnet.

In der Anodenversorgung 22 des Brennstoffzellensystems ist ferner ein Wasserabscheider 26 verbaut, um das aus der Brennstoffzellenreaktion entstehende Produktwasser abzuleiten. Ein Ablass des Wasserabscheiders kann mit der Kathodenabgasleitung 32, einem Wassertank oder einer Abgasanlage verbunden sein.

Die Kathodenversorgung 30 des in Figur 1 gezeigten Brennstoffzellen-systems 100 umfasst einen Kathodenversorgungspfad 31, welcher den Kathodenräumen 13 des Brennstoffzellenstapels 10 ein sauerstoffhaltiges Kathodenbetriebsmittel zuführt, insbesondere Luft, die aus der Umgebung angesaugt wird. Die Kathodenversorgung 30 umfasst ferner einen Kathodenabgaspfad 32, welcher das Kathodenabgas (insbesondere die Abluft) aus den Kathodenräumen 13 des Brennstoffzellenstapels 10 abführt und dieses gegebenenfalls einer nicht dargestellten Abgasanlage zuführt.

Zur Förderung und Verdichtung des Kathodenbetriebsmittels ist in dem Kathodenversorgungspfad 31 ein Verdichter 33 angeordnet. In dem dargestellten Ausführungsbeispiel ist der Verdichter 33 als ein hauptsächlich elektromotorisch angetriebener Verdichter 33 ausgestaltet, dessen Antrieb über einen mit einer entsprechenden Leistungselektronik 35 ausgestatteten Elektromotor 34 erfolgt.

Das in Figur 1 gezeigte Brennstoffzellensystem 100 weist ferner ein stromaufwärts des Verdichters 33 in der Kathodenversorgungsleitung 31 angeordnetes Befeuchtermodul 39 auf. Das Befeuchtermodul 39 ist einerseits so in dem Kathodenversorgungspfad 31 angeordnet, dass es von dem Kathodenbetriebsgas durchströmbar ist. Andererseits ist es so in dem Kathodenabgaspfad 32 angeordnet, dass es von dem Kathodenabgas durchströmbar ist. Ein Befeuchter 39 weist typischerweise eine Mehrzahl von wasserdampfpermeablen Membranen auf, die entweder flächig oder in Form von Hohlfasern ausgebildet sind. Dabei wird eine Seite der Membranen von dem vergleichsweise trockenen Kathodenbetriebsgas (Luft) überströmt und die andere Seite von dem vergleichsweise feuchten Kathodenabgas (Abgas). Getrieben durch den höheren Partialdruck an Wasserdampf in dem Kathodenabgas kommt es zu einem Übertritt von Wasserdampf über die Membran in das Kathodenbetriebsgas, das auf diese Weise befeuchtet wird.

Das Brennstoffzellensystem 100 weist ferner einen die Kathodenversorgungsleitung stromaufwärts und stromabwärts des Befeuchters 39 miteinander verbindenden Befeuchterbypass 37 mit einem darin angeordneten Klappenventil als Bypassstellmittel 38 auf. Ferner sind Klappenventile 27.3 und 27.4 stromaufwärts des Brennstoffzellenstapels 10 in der Anodenversorgungsleitung 31 beziehungsweise stromabwärts des Brennstoffzellenstapels 10 in der Anodenabgasleitung 32 angeordnet.

Verschiedene weitere Einzelheiten der Anoden- und Kathodenversorgung 20, 30 sind in Figur 1 aus Gründen der Übersichtlichkeit nicht gezeigt. Beispielsweise kann die Anodenabgasleitung 22 in die Kathodenabgasleitung 32 münden, sodass das Anodenabgas und das Kathodenabgas über eine gemeinsame Abgasanlage abgeführt werden.

Die Figur 2 zeigt eine Darstellung eines Brennstoffzellenstapels gemäß dem Stand der Technik, der im Brennstoffzellensystem 100 der Figur 1 angeordnet sein kann. Der Brennstoffzellenstapel 10 weist eine Mehrzahl von in Stapelrichtung S flächig aufeinander gestapelten Brennstoffzellen auf.

In Stapelrichtung S ist der Brennstoffzellenstapel 10 von einer ersten Endplatte 51 und einer gegenüberliegenden zweiten Endplatte 52 begrenzt. In einer ersten Richtung quer zur Stapelrichtung S ist der Brennstoffzellenstapel 10 durch Seitenverkleidungen 53, 54 begrenzt. In einer zweiten Richtung quer zur ersten Richtung und quer zur Stapelrichtung S ist der Brennstoffzellenstapel 10 durch Seitenverkleidung 56 begrenzt.

Der in Figur 2 gezeigte Brennstoffzellenstapel 10 ist über eine Mehrzahl von insgesamt fünf Spannelementen 55 komprimiert. Jedes Spannelement 55 umläuft dabei einen Querschnitt des Brennstoffzellenstapels 10 vollständig, wobei es die Endplatten 51, 52 sowie die Seitenverkleidung 56 überstreicht. Die Spannelemente 55 liegen dabei an den Endplatten 51, 52 und der Seitenverkleidung 56 an. Jedes Spannelement 55 ist in einem Bereich der ersten Endplatte 51 mit sich selbst verschweißt. Zum Komprimieren des Brennstoffzellenstapels 10 erfolgt das Verschweißen der Spannelemente 55 mit sich selbst, während die Spannelemente 55 unter Zugspannung stehen.

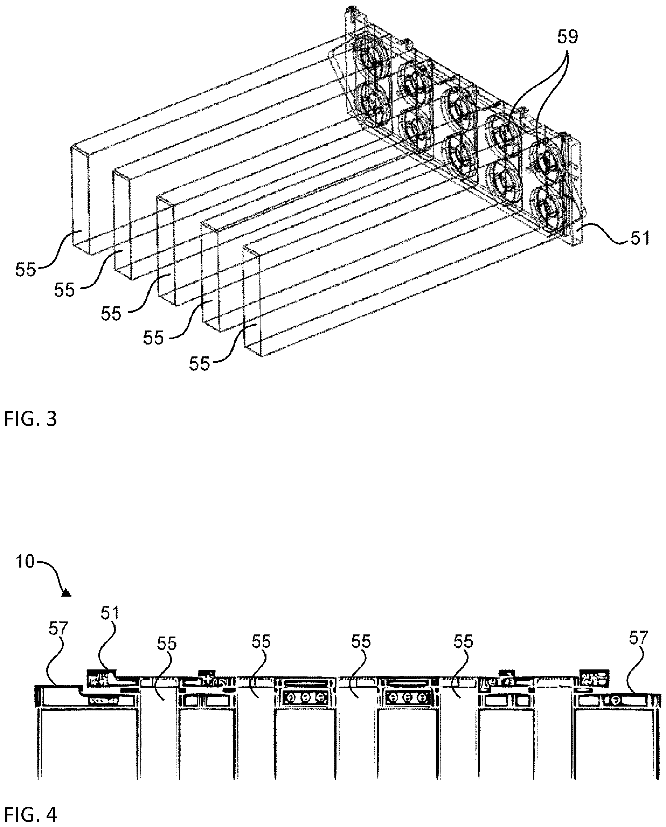

Ein Nachspannen der Spannelemente 55 ist bei dem Brennstoffzellenstapel 10 gemäß der Figur 2 nicht möglich. Stattdessen sind, wie in der Figur 3 dargestellt, zwischen der Endplatte 51 und einer Kompressionsplatte (nicht dargestellt) des Brennstoffzellenstapels 10 der Figur 2 eine Mehrzahl von Kompressionsfedern 59 angeordnet. Kommt es zu einem alterungsbedingten Längen der Spannelemente 55, soll dies durch die Kompressionsfedern 59 ausgeglichen werden. Die Federn 59 sind in nach innen weisenden Vertiefungen der Endplatte 51 angeordnet. Somit ist entweder zusätzlicher Bauraum für die Federn 59 notwendig, beispielsweise durch eine dickere Ausführung der Endplatte 51, oder die Endplatte 51 muss im Bereich der Vertiefungen dünner ausgebildet werden und ist somit instabiler. Beide Varianten führen zu spezifischen Nachteilen des jeweiligen Designs.

Wie ferner in der Figur 4 dargestellt, ist aufgrund der Verwendung um laufender Spannelemente 55 ein Spannen der ersten Endplatte 51 in den ersten Einlass-/Auslassbereichen 57 des Brennstoffzellenstapels 10, in denen die Betriebsmedien zu- beziehungsweise abgeführt werden, nicht möglich. Somit kommt es im Stand der Technik nachteilig zu einem Aufbiegen der ersten Endplatten 51 in deren ersten Endbereichen 57.

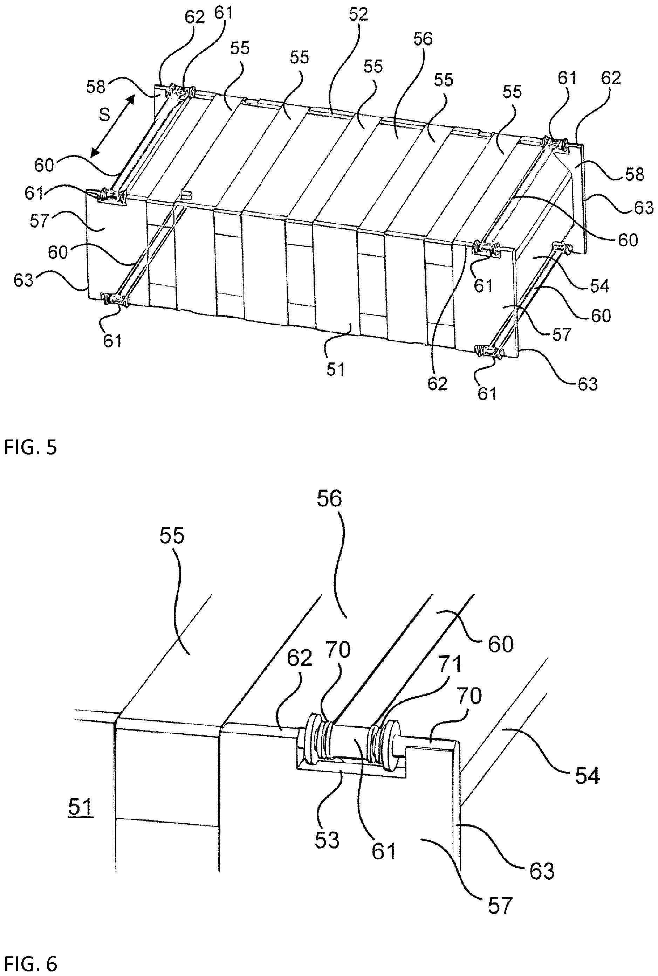

Figur 5 zeigt eine schematische Darstellung eines Brennstoffzellenstapels 10 gemäß einer ersten Ausführungsform der vorliegenden Erfindung. Figur 6 zeigt eine Detaildarstellung dieses Brennstoffzellenstapels 10, der im Folgenden beschrieben wird, sofern er sich von dem Brennstoffzellenstapel gemäß den Figuren 2 bis 3 unterscheidet.

Der Brennstoffzellenstapel 10 weist eine erste Endplatte 51 sowie eine gegenüberliegende zweite Endplatte 52 auf. Dabei weist die erste Endplatte 51 erste Endbereiche 57 mit darin befindlichen Ein- und Auslassöffnungen auf und weist die zweite Endplatte 52 zweite Endbereiche 58 mit darin befindlichen Ein- und Auslassöffnungen auf. Die Endplatten 51, 52 haben jeweils eine rechteckige Form mit einem Paar kurzer und einem Paar langer Seitenkanten. Die ersten und zweiten Endbereiche 57, 58 umfassen die kurzen Seitenkanten jeweils vollständig und die langen Seitenkanten nur zum Teil.

Die ersten und zweiten Endplatten 51, 52 sind entlang ihrer langen Seitenkanten mittels einer Vielzahl erster Spannelemente 55 verspannt. Die Spann-elemente 55 umlaufen dabei den Querschnitt des Brennstoffzellenstapels 10 vollständig. Die somit kreisförmig geschlossen ausgebildeten Spannelemente 55 sind im Bereich der ersten Endplatte 51 mit sich verschweißt. Die ersten Spannelemente 55 entsprechen somit den mit Bezug zur Figur 2 bereits erläuterten, aus dem Stand der Technik bekannten Spannelementen.

Zusätzlich weist der Brennstoffzellenstapel 10 zweite elastische Spannelemente 60 auf, die jeweils zwischen einem ersten Endbereich 57 der ersten Endplatte 51 und einem zweiten Endbereich 58 der zweiten Endplatte 52 gespannt sind. Jeder Endbereich 57, 58 weist einen ersten Kantenbereich 62 auf, der Teil einer langen Seitenkante der Endplatte 51, 52 ist. Ferner weist jeder Endbereich 57, 58 einem zum ersten Kantenbereich senkrecht verlaufenden zweiten Kantenbereich 63 auf, der eine kurze Seitenkante der Endplatte 51, 52 umfasst. In der Figur 5 sind die elastischen Spannelemente 60 zwischen den ersten Kantenbereichen 62 der Endplatten 51, 52 gespannt.

Wie im Detail in der Figur 6 dargestellt, ist im Bereich des ersten Kantenbereiches 62 der Endplatten 51, 52 jeweils eine Montagewelle 70 drehbar gelagert. Dazu weisen die Endplatten 51, 52 jeweils Aussparungen 53 in den er-sten Kantenbereichen 62 auf, in denen die jeweilige Montagewelle 60 freiliegt. Die Endabschnitte 61 jedes elastischen Spannelements 60 sind an den Montagewellen 70 fixiert, wobei jeweils ein Endabschnitt 61 an einer Montagewelle 70 fixiert ist. Durch das Fixieren, das heißt stoff-, kraft-, und/oder formschlüssiges Befestigen der Endabschnitte 61 der Spannelemente 60 an den Montagewellen 70 im Bereich von Aussparungen 53 der Endplatten 51, 52 können die Spannelemente 60 durch Drehen der Montagewellen 70 vorteilhaft auf diese aufgewickelt werden und somit nachgespannt werden, ohne dass die Endplatten 51 ,52 dieses Aufwickeln behindern würden.

Innerhalb der Aussparungen 53 sind ferner Torsionsfedern 71 sowohl an der Montagewelle 70 als auch an der jeweiligen Endplatte 51, 52 fixiert. Insbesondere sind die Torsionsfedern 70 mit der jeweiligen Montagewelle 70 verschweißt und mittels eines Flanschs (nicht dargestellt) an einer nach innen weisenden Wandung der jeweiligen Aussparung 53 befestigt. Dabei ist jeder Endabschnitt 61 jedes Spannelements 60 in jeder Aussparung 53 von jeweils zwei Torsionsfedern 71 umgeben. Auf jedem innerhalb einer Aussparung 53 freiliegenden Abschnitts einer Montagewelle 70 sind somit ein Endabschnitt 61 eines Spannelements 60 und zwei Torsionsfedern 71 angeordnet.

Die Torsionsfedern 71 sind so gespannt, dass eine von den Torsionsfedern 71 auf die Montagewelle 70 ausgeübte Kraft beziehungsweise ein auf die Montagewelle 70 ausgeübtes Drehmoment einer von den Spannelementen 60 auf die Montagewelle 70 ausgeübten Kraft beziehungsweise Drehmoment entgegengesetzt ist. Dabei überträgt insbesondere ein zumindest einfach um die Montagewelle 71 gewickeltes Spannelement 60 ein Drehmoment auf die Montagewelle 71.

Aufgrund der drehbaren Lagerung der Montagewellen 70 besteht stets ein kinematisches Gleichgewicht zwischen Torsionsfedern 71 und den Spannelementen 60. Somit wird ein Nachlassen der Zugspannung der Spannelemente 60, beispielsweise durch ein alterungsbedingtes Längen, durch ein Aufwickeln der Spannelemente 60 auf die Montagewellen 70, welches durch das Drehmoment der Torsionsfedern 71 bewirkt wird, ausgeglichen.

Mit dem erfindungsgemäßen Brennstoffzellenstapel 10 ist eine gezielte, von der Kompression durch die Spannelemente 60 unabhängige Kompression des Brennstoffzellenstapels 10 in den Endbereichen 57, 58 der Endplatten 51, 52 mittels den Spannelementen 60, den Montagewellen 70 und den Torsionsfedern 71 dauerhaft gewährleistet. Dabei ermöglicht die Montagewelle 71 ein Nachspannen der Spannelemente 70 und die Torsionsfedern 71 den dauerhaften Erhalt einer bestimmten Spannung der Spannelemente 70.

Bevorzugt weisen die Montagewellen 70 jeweils eine längserstreckte Radialnut (nicht dargestellt) auf. Mit anderen Worten ist entlang einer Längsausdehnung der Montagewelle 70 eine Nut in radialer Richtung in die Montagewelle 70 eingebracht. Die Radialnut ist dabei dafür ausgebildet, einen Endabschnitt 61 eines der Spannelemente 60 aufzunehmen.

Der Endabschnitt 61 wird daraufhin in der Radialnut fixiert, beispielsweise stoffschlüssig mittels eines Klebstoffs. Ebenso denkbar ist, dass der Endabschnitt 61 eine endständige Verdickung aufweist, die mit einer innenliegenden Aufweitung der Radialnut korrespondiert. Der Endabschnitt 61 des Spannelements 60 kann dann seitlich in die Montagewelle 70 eingeführt werden, das heißt in Richtung der Längsausdehnung der Welle 70, und wäre somit formschlüssig in der Radialnut fixiert. Ebenso denkbar wäre, dass die Radialnut nach Einführen des Endabschnitts 61 verengt wird, beispielsweise durch Aufsetzen eines Sprengrings auf die Welle 70. Dies hätte eine kraftschlüssige Fixierung des Endabschnitts 61 in der Welle 70 zur Folge.

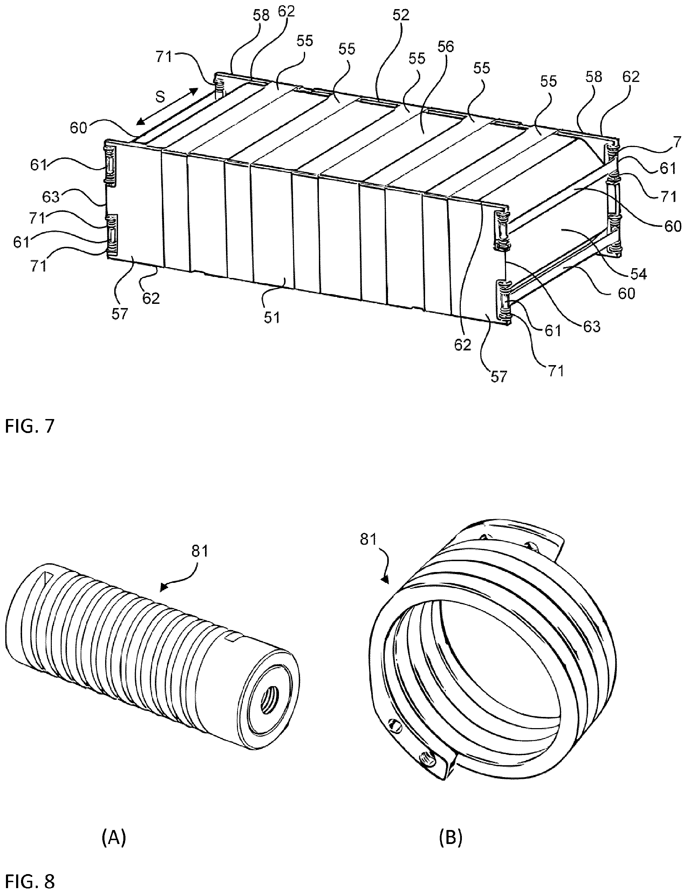

Ein Brennstoffzellenstapel 10 gemäß einer weiteren Ausführungsform ist in Figur 7 gezeigt. Diese unterscheidet sich von der ersten Ausführungsform der Figuren 4 bis 6 dadurch, dass die elastischen Spannelemente 60 zwischen zweiten Kantenbereichen 63 der Endplatten 51, 52 gespannt sind. Insbesondere sind jeweils zwei elastische Spannelemente 60 zwischen einem zweiten Kantenbereich 63 eines ersten Endbereichs 57 der ersten Endplatte und einem zweiten Kantenbereich 63 eines zweiten Endbereichs 58 der zweiten Endplatte 52 gespannt. Insgesamt sind somit also vier elastische Spannelemente 60 zusätzlich zu den fünf umlaufenden Zug- und Spannelementen 55 zwischen der ersten und zweiten Endplatte 51, 52 gespannt. Alternativ könnte auch jeweils nur ein breites elastisches Spannelement 60 zwischen Endbereichen 57, 58 der Endplatten 51, 52 gespannt sein.

In Figur 8 sind zwei bevorzugte Ausführungsformen einer Torsionsfeder 80 als gefräste Hohlfedern 81 dargestellt. Dabei zeigt Figur 8 (A) eine erste aus einem Hohlzylinder Federstahl gefrästen Torsionsfeder 80. Diese weist ein Innengewinde auf, mit dem die Torsionsfeder 80 auf eine Montagewelle 60 aufgeschraubt werden kann, wobei die Gewinderichtung eine Selbstsicherung der Feder 80 auf der Montagewelle 60 bewirkt. Eine Fixierung der Torsionsfeder 80 am Brennstoffzellenstapel 10, insbesondere einer Innenwandung der Aussparung 53 einer Endplatte 51, 52 erfolgt im einfachsten Fall durch einen Kraftschluss der komprimierten Torsionsfeder 80 mit einer Endplatte 51, 52 und einem Formschluss einer in die Ausfräsung der Feder 80 eingreifenden Anschlagsnase der Endplatte 51 ,52. Figur 8 (B) zeigt eine zweite aus einem Hohlzylinder Federstahl gefrästen Torsionsfeder 80. Diese weist beidseitig an ihren Enden Durchgangsbohrungen als Anschlusselemente für eine Befestigung an der Montagewelle 60 beziehungsweise dem Brennstoffzellenstapel 10, insbesondere einer Endplatte 51, 52, auf. Die Anschlusselemente sind als Führung für einen Sicherungssplint ausgebildet.

## Patentansprüche

1. Brennstoffzellenstapel (10), aufweisend
eine erste Endplatte (51) und eine zweite Endplatte (52);
eine Vielzahl von zwischen den Endplatten (51, 52) angeordneten Brennstoffzellen (11);
zumindest ein in Stapelrichtung (S) zwischen den Endplatten (51, 52) gespanntes erstes Zug- oder Spannelement (55);
wobei in ersten Endbereichen (57) der ersten Endplatten (51) und/oder in zweiten Endbereichen (58) der zweiten Endplatte (52) Ein- und Auslassöffnungen für Betriebsmedien angeordnet sind,
wobei
zumindest ein elastisches zweites Spannelement (60) zwischen einem ersten Endbereich (57) und einem zweiten Endbereich (58) gespannt ist,
**dadurch gekennzeichnet, dass** sich eine von einem gespannten ersten Zug- oder Spannelement (55) aufgebrachte Zugspannung von einer von einem elastischen zweiten Spannelement (60) aufgebrachten Zugspannung unterscheidet, und dass die von dem zweiten Spannelement (60) aufgebrachte Zugspannung geringer ist als die von dem ersten Zug- oder Spannelement (55) aufgebrachte Zugspannung .

2. Brennstoffzellenstapel (10) nach Anspruch 1, wobei die Endbereiche (57, 58) erste Kantenbereiche (62) und zu den ersten Kantenbereichen (62) senkrechte zweite Kantenbereiche (63) aufweisen, wobei das zumindest eine elastische zweite Spannelement (60) zwischen ersten Kantenbereichen (62) und/oder zweiten Kantenbereichen (63) gespannt ist.

3. Brennstoffzellenstapel (10) nach einem der vorangehenden Ansprüche, ferner aufweisend zumindest eine entlang eines Kantenbereichs (62, 63) eines ersten und/oder zweiten Endbereichs (57, 58) angeordnete, drehbare Montagewelle (70), wobei ein Endabschnitt (61) zumindest eines elastischen zweiten Spannelements (60) an der Montagewelle (70) fixiert ist.

4. Brennstoffzellenstapel (10) nach Anspruch 3, wobei durch Drehung der Montagewelle (70) eine Zugspannung des elastischen zweiten Spannelements (60) einstellbar ist.

5. Brennstoffzellenstapel (10) nach Anspruch 3 oder 4, wobei die drehbare Montagewelle (70) über zumindest eine gespannte Torsionsfeder (71) mit dem Brennstoffzellenstapel (10) verbunden ist.

6. Brennstoffzellenstapel (10) nach Anspruch 5, wobei die zumindest eine Torsionsfeder (71) als Schraubenfeder, Drehstabfeder oder gefräste Hohlfeder (81) ausgebildet ist.

7. Brennstoffzellenstapel (10) nach einem der Ansprüche 3 bis 6, ferner aufweisend zumindest einen zum elektromotorischen Antrieb der zumindest einen Montagewelle (70) ausgebildeten Elektromotor.

8. Brennstoffzellenstapel (10) nach einem der Ansprüche 3 bis 7, wobei die zumindest eine Montagewelle (70) zumindest ein Sperrrad und zumindest eine mit dem Sperrrad in Eingriff stehende Sperrklinke aufweist.

9. Fahrzeug mit einem Brennstoffzellenstapel (10) nach einem der Ansprüche 1 bis 8.

## Claims

1. A fuel cell stack (10), comprising
a first end plate (51) and a second end plate (52);
a plurality of fuel cells (11) arranged between the end plates (51, 52);
at least one first tension or tensioning element (55) tensioned in the stacking direction (S) between the end plates (51, 52);
wherein inlet and outlet openings for operating media are arranged in first end regions (57) of the first end plates (51) and/or in second end regions (58) of the second end plate (52), wherein
at least one elastic second clamping element (60) is clamped between a first end region (57) and a second end region (58),
**characterized in that** a tensile stress applied by a tensioned first tension or tensioning element (55) differs from a tensile stress applied by an elastic second tensioning element (60), and **in that** the tensile stress applied by the second tensioning element (60) is lower than the tensile stress applied by the first tension or tensioning element (55).

2. The fuel cell stack (10) according to claim 1, wherein the end regions (57, 58) have first edge regions (62) and second edge regions (63) perpendicular to the first edge regions (62), wherein the at least one elastic second tensioning element (60) is tensioned between first edge regions (62) and/or second edge regions (63).

3. The fuel cell stack (10) according to any one of the preceding claims, further comprising at least one rotatable mounting shaft (70) arranged along an edge region (62, 63) of a first and/or second end region (57, 58), wherein an end portion (61) of at least one elastic second tensioning element (60) is fixed to the mounting shaft (70).

4. The fuel cell stack (10) according to claim 3, wherein a tensile stress of the elastic second tensioning element (60) can be adjusted by rotating the mounting shaft (70).

5. The fuel cell stack (10) according to claims 3 or 4, wherein the rotatable mounting shaft (70) is connected to the fuel cell stack (10) via at least one tensioned torsion spring (71).

6. The fuel cell stack (10) according to claim 5, wherein the at least one torsion spring (71) is designed as a helical spring, torsion bar spring or milled hollow spring (81).

7. The fuel cell stack (10) according to any one of claims 3 to 6, further comprising at least one electric motor configured to electromotively drive the at least one mounting shaft (70).

8. The fuel cell stack (10) according to any one of claims 3 to 7, wherein the at least one mounting shaft (70) comprises at least one ratchet wheel and at least one pawl in engagement with the ratchet wheel.

9. A vehicle with a fuel cell stack (10) according to any one of claims 1 to 8.

## Revendications

1. Empilement de piles à combustible (10) présentant
une première plaque d'extrémité (51) et une seconde plaque d'extrémité (52);
une pluralité de piles à combustible (11) agencée entre les plaques d'extrémité (51, 52);
au moins un premier élément de traction ou de serrage (55) tendu dans le sens d'empilement (S) entre les plaques d'extrémité (51, 52);
dans lequel des ouvertures d'entrée et de sortie pour des fluides de fonctionnement sont agencées dans des premières zones d'extrémité (57) des premières plaques d'extrémité (51) et/ou dans des secondes zones d'extrémité (58) de la seconde plaque d'extrémité (52), dans lequel
au moins un second élément de serrage (60) élastique est tendu entre une première zone d'extrémité (57) et une seconde zone d'extrémité (58),
**caractérisé en ce qu'**une tension de traction appliquée par un premier élément de traction ou de serrage (55) tendu se distingue d'une tension de traction appliquée par un second élément de serrage (60) élastique, et **en ce que** la tension de traction appliquée par le second élément de serrage (60) est inférieure à la tension de traction appliquée par le premier élément de traction ou de serrage (55).

2. Empilement de piles à combustible (10) selon la revendication 1, dans lequel les zones d'extrémité (57, 58) présentent des premières zones d'arête (62) et des secondes zones d'arête (63) perpendiculaires aux premières zones d'arête (62), dans lequel le au moins un second élément de serrage (60) élastique est tendu entre des premières zones d'arête (62) et/ou des secondes zones d'arête (63).

3. Empilement de piles à combustible (10) selon l'une quelconque des revendications précédentes, présentant en outre au moins un arbre de montage (70) rotatif agencé le long d'une zone d'arête (62, 63) d'une première et/ou seconde zone d'extrémité (57, 58), dans lequel une section d'extrémité (61) au moins d'un second élément de serrage (60) élastique est fixée à l'arbre de montage (70).

4. Empilement de piles à combustible (10) selon la revendication 3, dans lequel une tension de traction du second élément de serrage (60) élastique est réglable par rotation de l'arbre de montage (70).

5. Empilement de piles à combustible (10) selon la revendication 3 ou 4, dans lequel l'arbre de montage (70) rotatif est relié à l'empilement de piles à combustible (10) par le biais d'au moins un ressort de torsion (71) tendu.

6. Empilement de piles à combustible (10) selon la revendication 5, dans lequel le au moins un ressort de torsion (71) est formé comme un ressort hélicoïdal, ressort à barre de torsion ou ressort creux fraisé (81).

7. Empilement de piles à combustible (10) selon l'une quelconque des revendications 3 à 6, présentant en outre au moins un moteur électrique formé pour l'entraînement électromotorisé de l'au moins un arbre de montage (70).

8. Empilement de piles à combustible (10) selon l'une quelconque des revendications 3 à 7, dans lequel le au moins un arbre de montage (70) présente au moins une roue de verrouillage et au moins un cliquet de verrouillage se trouvant en prise avec la roue de verrouillage.

9. Véhicule avec un empilement de piles à combustible (10) selon l'une quelconque des revendications 1 à 8.
